# EUROPÄISCHE PATENTSCHRIFT

(11) **EP 2 128 457 B1**
(45) Veröffentlichungstag und Bekanntmachung des Hinweises auf die Patenterteilung: **20.02.2013**
(21) Anmeldenummer: 09006155.7
(22) Anmeldetag: 06.05.2009
(51) Int. Cl.: F16B 13/08

(54) **Befestigungselement, bestehend aus einem Ankerbolzen und einem Klemmkeil**
Attachment element made of an anchor bolt and a wedge
Elément de fixation constitué d'un boulon d'ancrage et d'un élément de serrage

(30) Priorität: 29.05.2008 DE 102008025765
(43) Veröffentlichungstag der Anmeldung: 02.12.2009
(73) Patentinhaber: TOGE-Dübel A. Gerhard KG, 90431 Nürnberg (DE)
(72) Erfinder: Gerhard, Anton, 90427 Nürnberg (DE)
(74) Vertreter: Rau, Manfred

(56) Entgegenhaltungen:
- EP-A1- 0 016 901
- EP-A1- 0 742 374
- EP-B1- 1 204 825
- DE-A1- 19 531 693

## Beschreibung

Die Erfindung betrifft ein Befestigungselement nach dem Oberbegriff des Anspruches 1.

Bei einem derartigen aus der EP 1 204 825 B1 bekannten Befestigungselement weist der Klemmkeil eine Sollbruchzone auf, die einen flachen Keil-Abschnitt aufweist, der zwei in Richtung der Mittel-Längs-Achse im Abstand voneinander angeordnete Soll-Bruch-Stellen aufweist, die quer zur Mittel-Längs-Achse und im wesentlichen parallel zu der zum hinteren Ende des Ankerbolzens verlaufenden Fläche verlaufen. Beim Eintreiben des Klemmkeils des in eine Bohrung eingesetzten Befestigungselements soll nach dem Verkeilen des Klemmkeils relativ zum Ankerbolzen eine der Sollbruchstellen brechen und das der Sollbruchstelle zugewandte Ende des abgebrochenen vorderen Teils des Klemmkeils in der Bohrung-Wand verkeilen. In der Praxis hat sich dies nicht als erfolgreich erwiesen. Es kommt hinzu, dass die Klemmkeile - wie in der Praxis generell alle entsprechenden Befestigungselemente - aus gehärtetem und vergütetem Stahl bestehen müssen, wodurch die Kosten erheblich erhöht werden.

Aus der DE 29 13 090 A1 (entsprechend US 4,312,611) ist ein im Grundaufbau ähnliches Befestigungselement bekannt, das mit zwei rechteckigen Kerben versehen ist, zwischen denen ein dünner, als Sollbruchstelle dienender Trennsteg ausgebildet ist. Wenn während des Einschlagens des Spreizkeils der Eintreibwiderstand einen bestimmten Wert übersteigt, wird der Trennsteg abgeschert, sodass der rückwärtige Teil des Spreizkeils gegenüber dem vorderen Teil nachrücken kann. Auf diese Weise wird ein Überspreizen des Befestigungselements in einem engen Bohrloch vermieden und andererseits ein Einschlagen des Spreizkeils ermöglicht, bis dessen über den Flansch vorstehendes Ende bündig mit dem Flansch liegt. Eine ähnliche Ausgestaltung ist zum gleichen Zweck aus der DE 195 17 216 A1 bekannt.

Aus der EP 0 742 374 A1 ist ein Befestigungselement bekannt, das ähnlich dem aus der EP 1 204 825 B1 bekannten Befestigungselement ausgestaltet ist. Es weist einen Klemmkeil auf, der eine Soll-Bruch-Stelle enthält, die durch einen parallel zur Mittel-Längs-Achse verlaufenden Steg gebildet ist. Dieser Steg ist durch Einschnitte begrenzt, die jeweils viertelkreisförmig nach innen in Richtung zur Mittel-Längs-Achse gewölbte Flächen aufweisen. Beim Reißen dieser Soll-Bruch-Stelle werden die beiden Teile des Klemmkeils in axialer Richtung zusammengeschoben. Der Zweck dieser Soll-Bruch-Stelle liegt ausschließlich darin, beim Setzvorgang auch in festem Aufnahmematerial ein Nachrücken des rückwärtigen Bereiches des Klemmkeils in Setzrichtung zu ermöglichen.

Der Erfindung liegt die Aufgabe zugrunde, ein Befestigungselement der gattungsgemäßen Art so auszugestalten, dass es kostengünstig herstellbar ist und mit hohem Auszugswiderstand gesetzt werden kann.

Diese Aufgabe wird erfindungsgemäß durch die Merkmale im Kennzeichnungsteil des Anspruchs 1 gelöst.

Durch die Ausgestaltung der Soll-Bruch-Stelle wird erreicht, dass nach dem Durchtrennen des die Soll-Bruch-Stelle bildenden Stegs die beiden Teile des Klemmkeils quer zu dessen Längs-Achse verspreizt werden, wodurch der vordere Teil des Spreizkeils sicherstellt, dass ein Ausziehen des Ankerbolzens nur unter sehr hohen Kräften möglich ist. Die erfindungsgemäße Ausgestaltung ermöglicht es zum einen, den Klemmkeil aus unvergütetem und ungehärtetem Stahl herzustellen, was eine völlige Abkehr von der Praxis darstellt. Zum anderen fördert die Ausbildung des Klemmkeils aus unvergütetem und ungehärtetem Stahl den erfindungsgemäßen Effekt, weil sichergestellt ist, dass der als Soll-Bruch-Stelle dienende Steg tatsächlich auch durchtrennt wird und ggf. unter einer gewissen plastischen Verformung mit der Bohrungs-Wand gleichsam verriegelt wird. Die erfindungsgemäße Werkstoffwahl für den Klemmkeil ermöglicht es weiterhin, beim Eintreiben den Klemmkeil ggf. gegenüber dem Flansch zu vernieten, wodurch auch ein unbeabsichtigtes Herauslösen des hinteren Teils des Klemmkeils ausgeschlossen wird. Die am Klemmkeil ausgebildete Bremsfläche bewirkt, dass beim ersten möglichen Lösen des Befestigungselementes der abgebrochene vordere Teil des Klemmkeils im Bohrloch gehalten wird.

Die erfindungsgemäßen Effekte werden in besonderer Weise durch die Weiterbildung nach Anspruch 2 und im Detail nach den Ansprüchen 3 bis 5 gefördert, da hierdurch die Reibung zwischen Ankerbolzen und Bohrloch-Wand vergrößert wird. Die weiteren Ausgestaltungen nach den Ansprüchen 6 bis 8 fördern den Effekt, dass beim ersten möglichen Lösen des Befestigungselementes der abgebrochene vordere Teil des Klemmkeils im Bohrloch gehalten wird.

Die Unteransprüche 9 und 10 geben weitere vorteilhafte Ausgestaltungen wieder.

Weitere Vorteile und Merkmale der Erfindung ergeben sich aus der Beschreibung eines Ausführungsbeispiels anhand der Zeichnung. Es zeigt
- Fig. 1: ein Befestigungselement in ungespreiztem Zustand in LängsSeiten-Ansicht entsprechend dem Sichtpfeil I in Fig. 2,
- Fig. 2: das Befestigungselement nach Fig. 1 in Längs-Drauf-Ansicht entsprechend dem Sichtpfeil II in Fig. 1,
- Fig. 3: einen Schnitt durch das Befestigungselement entsprechend den Schnittlinien III-III in Fig. 2,
- Fig. 4: eine Seiten-Längs-Ansicht eines Klemmkeils,

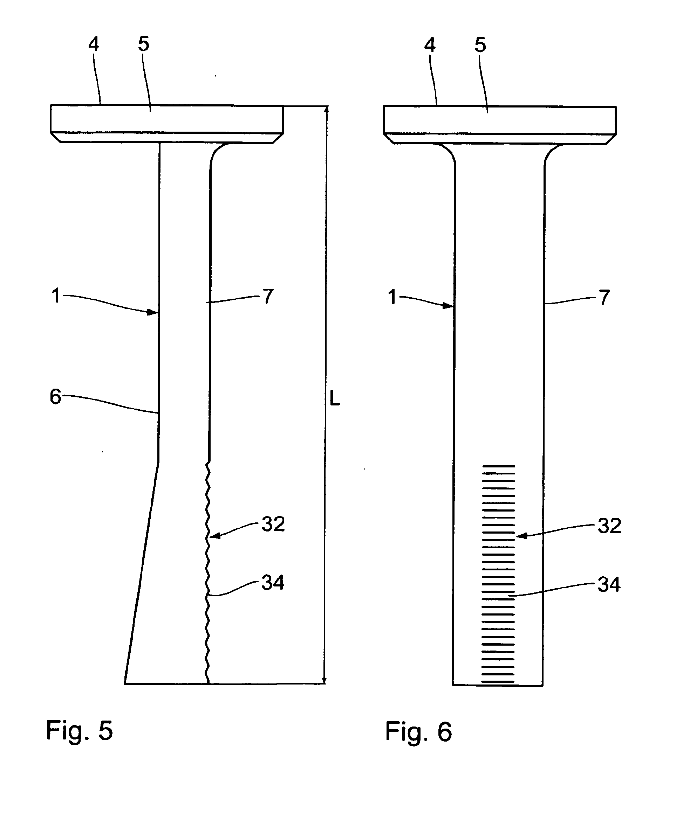

- Fig. 5: eine Seiten-Längs-Ansicht eines Ankerbolzens in gegenüber den Fig. 1 und 2 abgeänderter Ausgestaltung,
- Fig. 6: eine Rückansicht des Ankerbolzens,

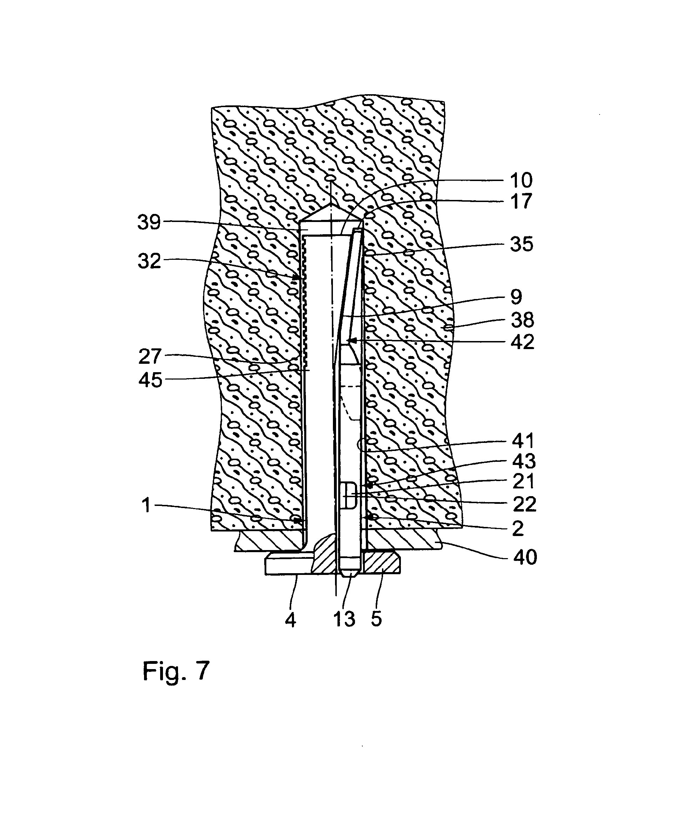

- Fig. 7: eine Seiten-Längs-Ansicht eines Befestigungselements in gespreiztem Zustand und

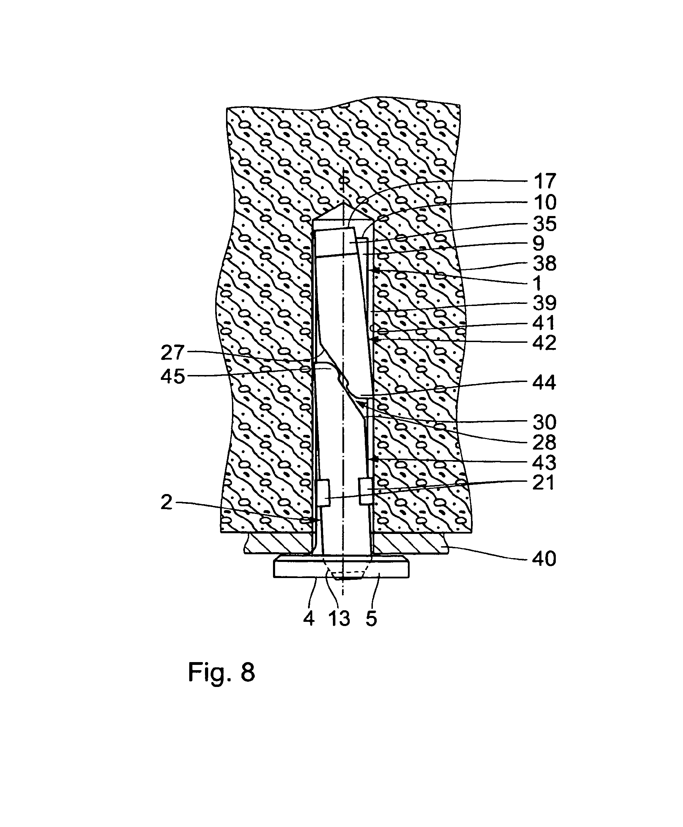

- Fig. 8: eine Längs-Drauf-Ansicht eines Befestigungselements in gespreiztem Zustand.

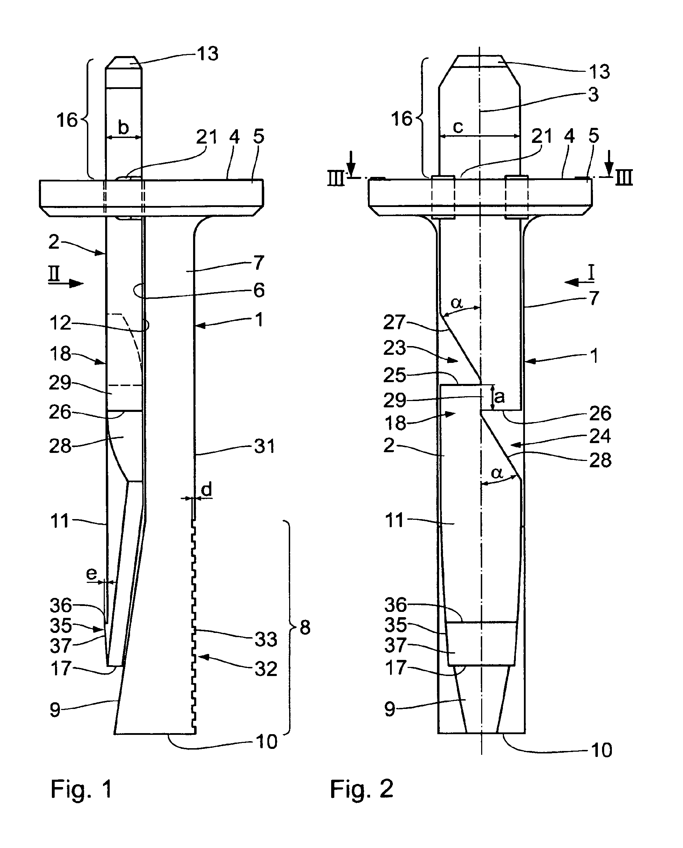

Das in der Zeichnung dargestellte Befestigungselement weist einen Ankerbolzen 1 und einen Klemmkeil 2 auf. Der Ankerbolzen 1 besteht in seinem Grundaufbau aus einem massiven Teil-Kreis-Zylinder mit einer Mittel-Längs-Achse 3, die der Einfachheit halber auch als Mittel-Längs-Achse 3 des gesamten Befestigungselementes bezeichnet wird. Der Ankerbolzen 1 weist an seinem hinteren Ende 4 einen ringförmigen, radial deutlich nach außen vorstehenden Flansch 5 auf, der einstückig mit dem Ankerbolzen 1, beispielsweise durch entsprechende Verformung, ausgebildet ist. Vom hinteren Ende 4 des Ankerbolzens 1 verläuft über etwa die Hälfte bis zwei Drittel seiner Gesamtlänge L eine Fläche 6 parallel zur Achse 3, und zwar in deren Nähe, sodass sich die Zylinderfläche 7 des Ankerbolzens 1 in diesem Bereich nur über etwa 190 bis 200° Umfangswinkel erstreckt. Im vorderen Bereich 8 des Ankerbolzens 1 erstreckt sich - ausgehend von der Fläche 6 - eine Keilfläche 9, die also vom vorderen Ende 10 des Ankerbolzens 1 zur Achse 3 hin geneigt ist. Am vorderen Ende 10 nähert sich der Querschnitt des Ankerbolzens wieder einem - allerdings noch nicht vollständigen - Kreisprofil, wie Fig. 2 zu entnehmen ist. Die Keilfläche 9 und die Fläche 6 sind eben, müssen dies aber nicht sein.

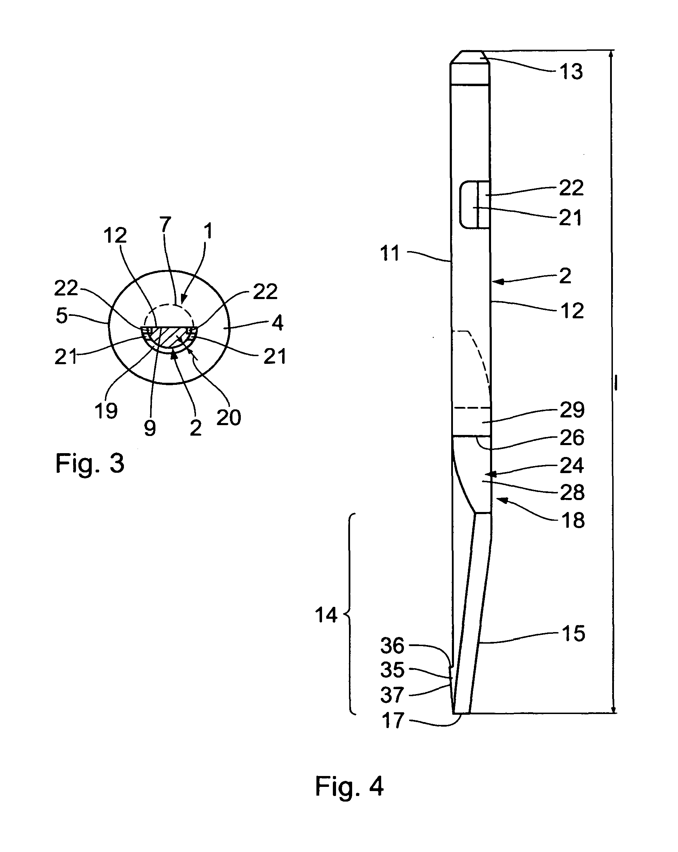

Der Klemmkeil 2 wird ebenfalls durch einen Teil-Kreis-Zylinder gebildet, wie aus den Fig. 3 und 4 hervorgeht. Der Durchmesser seines zugeordneten Zylinders ist aber geringfügig kleiner als der des Ankerbolzens 1, wie sich aus Fig. 2 und 3 ergibt. Seine Außenfläche 11 ist also ebenfalls eine Teil-Zylinder-Fläche, deren Mantellinien also - gleichermaßen wie bei der durch die Zylinderfläche 7 gebildeten Außenfläche des Ankerbolzens 1 - parallel zueinander verlaufen. Der Klemmkeil 2 weist eine Anlagefläche 12 auf, die der Fläche 6 des Ankerbolzens 1 angepasst ist. Diese Anlagefläche 12 erstreckt sich vom hinteren Ende 13 des Klemmkeils 2 in ungespreiztem Zustand des Befestigungselementes bis zum Übergang von der Fläche 6 in die Keilfläche 9 des Ankerbolzens 1. Im vorderen Bereich des Klemmkeils 2 schließt sich an die Anlagefläche 12 eine Spreizfläche 15 an, die in ungespreiztem Zustand des Befestigungselementes zumindest teilweise an der Keilfläche 9 des Ankerbolzens 1 anliegt. Wie aus den Fig. 1 und 2 ersichtlich ist, steht das hintere Ende 13 des Klemmkeils 2 in ungespreiztem Zustand des Befestigungselementes nach hinten, um einen maximalen Einschlagbereich 16 über den Flansch 5 vor. Das vordere Ende 17 des Klemmkeils 2 liegt hierbei hinter dem vorderen Ende 10 des Ankerbolzens 1; die Länge 1 des Klemmkeils 2 ist aber etwas größer als die Gesamtlänge L des Ankerbolzens 1. Aus dem Vorstehenden ergibt sich auch, dass die Länge der Spreizfläche 15 kleiner ist als die Länge der Keilfläche 9 jeweils in Richtung der Achse 3, während die Länge der Anlagefläche 12 deutlich größer ist als die Länge der Fläche 6, auch hier jeweils in Richtung der Achse 3 gesehen.

Der Klemmkeil 2 hat in dem Abschnitt vor der Spreizfläche 15 eine Quer-Spreiz-Zone 18, die weiter unten beschrieben wird.

Der Flansch 5 weist eine Durchgangs-Aussparung 19 für den Klemmkeil 2 auf. Diese Aussparung 19 weist gleichermaßen wie der Klemmkeil 2 einen Teil-Kreis-Querschnitt auf, dessen Radius aber etwas größer ist als der des Klemmkeils 2, sodass dessen Außenfläche 11 ein Spiel 20 von 0,2 bis 0,4 mm zur Aussparung 19 hat, wie aus Fig. 3 erkennbar ist. Der Klemmkeil 2 weist in dem in ungespreiztem Zustand des Befestigungselements innerhalb des Flansches 5 befindlichen Bereich zwei Vorsprünge 21 auf, die von der Anlagefläche 12 her ausgeformt sind, wodurch zwischen diesen Vorsprüngen 21 und der Anlagefläche 12 kleine Ausnehmungen 22 gebildet sind. Diese Vorsprünge haben in Richtung der Achse 3 eine etwas größere Länge als der Dicke des Flansches 5 entspricht. In unmontiertem Zustand des Klemmkeils 2 haben diese Vorsprünge 21 ein geringes Übermaß gegenüber der Querschnittsumrandung der Aussparung 19, sodass sie beim Einführen des Klemmkeils 2 vom hinteren Ende 4 des Ankerbolzens 1 in die Aussparung 19 geringfügig verformt werden, wodurch der Klemmkeil 2 sehr fest mit dem Ankerbolzen 1 in Achsrichtung verbunden wird. Wie aus Fig. 3 ersichtlich ist, liegen die Vorsprünge 21 aber nur gegen einen kleinen Bereich der Aussparung 19 an, während der größte Teil der Außenfläche 11 des Klemmkeils 2 gegenüber der Aussparung 19 freiliegt. Insofern ist die erwähnte Verformung der Vorsprünge 21 beim Eindrücken des Klemmkeils 2 in den Flansch 5 des Ankerbolzens 1 auch bei deutlichen Toleranzen in den Abmaßen von Ankerbolzen 1 mit Flansch 5 einerseits und Klemmkeil 2 mit Vorsprüngen 21 andererseits möglich.

Die Quer-Spreizzone 18 des Klemmkeils 2 besteht aus zwei Einschnitten 23, 24, die spiegelsymmetrisch zueinander angeordnet sind und die in Form eines rechtwinkligen Dreiecks ausgebildet sind. Eine Querfläche 25 bzw. 26 jedes Einschnitts 23, 24 verläuft quer, also senkrecht zur Mittel-Längs-Achse 3 und zwar bis zu dieser, wie aus Fig. 2 hervorgeht. Von dem der Achse 3 zugeordneten Ende der jeweiligen Querfläche 25 erstreckt sich eine Schrägfläche 27 bzw. 28 in Richtung zum hinteren Ende 13 des Klemmkeils 2 bzw. in Richtung vorderen Bereich 14 des Klemmkeils 2. So wie die Querflächen 25, 26 verlaufen auch die Schrägflächen 27, 28 parallel zueinander und zwar unter einem Winkel α gegenüber der Mittel-Längs-Achse 3, wobei für den Winkel α gilt: 25° ≤ α ≤ 35° und bevorzugt α = 30°. Der Abstand a der Querflächen 25, 26 voneinander in Richtung der Mittel-Längs-Achse 3 ist verhältnismäßig klein. Für ihn gilt im Hinblick auf die Dicke b des Klemmkeils 0,6 b ≤ a ≤ 0,8 b und bevorzugt 0,75 b = a. Im Hinblick auf die Breite c des Klemmkeils 2 gilt für die Länge a des Stegs 29 0,25 c ≤ a ≤ 0,4 c und bevorzugt 3 a = c. Der Steg 29 hat also eine Länge a und an seiner dicksten Stelle eine Dicke b. Dieser Steg 29 bildet eine Soll-Bruch-Stelle 30.

An der der Keilfläche 9 gegenüberliegenden Rückseite 31 des Ankerbolzens 1 ist eine feine Riffelung 32 ausgebildet, die sich in Richtung der Mittel-Längs-Achse 3 etwa über die Länge der Keilfläche 9 erstreckt. Diese Riffelung 32 kann nach Art einer Rechteck-Verzahnung 33 oder nach Art einer Säge-Verzahnung 34 ausgebildet sein.

Auf der Außenfläche 11 des Klemmkeils 2, und zwar an seinem vorderen Ende 17, ist eine gegenüber der Außenfläche 11 nach außen vorspringende Bremsfläche 35 ausgebildet, die an ihrem dem hinteren Ende 13 des Klemmkeils 2 zugewandten Ende mit einer Kante 36 in die Außenfläche 11 übergeht, wobei durch die Kante 36 ein ausgeprägter Absatz geschaffen wird, dem eine Art Widerhaken-Funktion zukommt. Wie die Zeichnung erkennen lässt, springt die Bremsfläche 35 gegenüber der Außenfläche 11 um ein Maß e vor, für das gilt 0,1 mm ≤ e ≤ 0,3 mm. Die Bremsfläche selber ist mit einer Oberflächen-Rauigkeit 37 versehen, die eine Rauigkeitstiefe von 30 µm bis 45 µm und bevorzugt von 36 µm aufweist.

Die Montage eines solchen Befestigungselementes geht wie folgt vonstatten, wobei darauf hingewiesen sei, dass derartige Befestigungselemente bevorzugt als sogenannte Deckennägel, also zum Befestigen von Lasten an Beton-Decken, eingesetzt werden.

In eine Decke 38 wird eine Bohrung 39 eingebracht, deren Durchmesser geringfügig größer ist als der Durchmesser des Ankerbolzens 1. Anschließend wird ein zu befestigendes Teil 40, das ein der Bohrung 39 entsprechendes Loch aufweist, das gegebenenfalls gleichzeitig mit der Bohrung 39 gebohrt wird, so gegen die Decke 38 gebracht, dass Loch und Bohrung 39 sich überdecken. Dann wird das in den Fig. 1 bis 3 dargestellte ungespreizte Befestigungselement durch das Loch in die Bohrung 39 eingeschoben, wobei das vordere Ende 10 des Ankerbolzens 1 zuerst eingeführt wird. Das Einschieben wird beendet, wenn mittels des Flansches 5 das Teil 40 gegen die Decke 38 gedrückt ist. Dann wird durch Hammerschläge auf das hintere Ende 13 des Klemmkeils 2 dieser in die Bohrung 39 eingetrieben, ohne dass die Lage des Ankerbolzens 1 in Richtung der Achse 3 sich nennenswert ändert. Durch die Verschiebung der Spreizfläche 15 auf der Keilfläche 9 wird zumindest der vordere Bereich 14 des Klemmkeils 2 radial zum Ankerbolzen 1 verschoben, wodurch der Gesamtquerschnitt des Befestigungselementes sich in seinem vorderen Bereich vergrößert. Durch dieses Spreizen erfolgt eine Verkeilung von Ankerbolzen 1 und Klemmkeil 2 in der Bohrung 39. Je nach Härte des Materials der Decke 38 und nach Übermaß der Bohrung 39 gegenüber dem Befestigungselement wird der Klemmkeil 2 unterschiedlich tief eingetrieben.

Wenn eine gewisse Verkeilung zwischen der Bohrungs-Wand 41 einerseits und dem Ankerbolzen 1 und dem Klemmkeil 2 andererseits erfolgt ist, wird beim weiteren Schlagen mit dem Hammer auf das hintere Ende 13 des Klemmkeils der Steg 29 durchgeschert. Hierdurch entstehen ein bereits in Richtung der Achse 3 relativ unverschieblich in der Bohrung 39 befindlicher vorderer Teil 42 und ein hinterer Teil 43 des Klemmkeils 2. Beim weiteren Eintreiben des hinteren Teils 43 gelangen die Schrägflächen 27, 28 übereinander, wodurch diese quer zur Mittel-Längs-Achse 3 auseinandergedrückt werden. Die beiden einander zugewandten, im Bereich des vorherigen Stegs 29 befindlichen Enden 44, 45 des vorderen Teils 42 und des hinteren Teils 43 werden hierbei in die Bohrungs-Wand 41 eingedrückt, und stützen sich dort axial ab. Dies gilt insbesondere für das Ende 44 des vorderen Teils 42.

Wenn der Ankerbolzen 1 von außen durch eine entsprechend große Kraft belastet wird, dann führt dies zu einer zusätzlichen Spreizwirkung zwischen dem vorderen Teil 42 und dem Ankerbolzen 1, da das vordere Teil 42 mit seinem Ende 44 in der Bohrungswand gleichsam formschlüssig verankert, ein Verschieben des vorderen Teils 42 in Richtung aus der Bohrung 39 hinaus also ausgeschlossen wird. Durch die Riffelung 32 wird auch eine zusätzliche Erhöhung der Reibungskräfte zwischen der Bohrungs-Wand 41 und dem Ankerbolzen 1 erreicht.

Ganz besonders wird der Verkeilungs-Effekt aber durch die Bremsfläche 35 verstärkt. Ihre Kante 36 gräbt sich zusätzlich in die Bohrungs-Wand 41 ein. Die Oberflächen-Rauigkeit 37 führt zusammen mit dem immer in Bohrungen 39 vorhandenen feinen Bohrmehl dazu, dass eine Vielzahl von formschlüssigen Verriegelungen im Mikro-Bereich zwischen der Bremsfläche und der Bohrungs-Wand 41 auftreten. Der vordere Teil 42 des Klemmkeils 2 wird also außerordentlich sicher in der Bohrung 39 gehalten.

Das Durchscheren des Klemmkeils 2 im Bereich der durch den Steg 29 gebildeten Soll-Bruch-Stelle 30 wird dadurch sichergestellt, dass der Klemmkeil 2 aus unvergütetem und ungehärtetem Stahl besteht, der also verhältnismäßig weich ist. Für derartige Stähle gilt eine Zugfestigkeit etwa 400 bis 600 N/mm² wobei die Scherfestigkeit üblicherweise im Bereich von 60 % der Zugfestigkeit liegt. Da solche Deckennägel in der Regel für Bohrungs-Nenn-Durchmesser von 6 mm gefertigt werden, ist die zu scherende Fläche des Stegs 29 etwa 5 bis 6 mm. Mittels eines üblichen mittelschweren Hammers, der zum Einschlagen des Klemmkeils 2 in der Praxis eingesetzt wird, kann also die Scherung herbeigeführt werden. Ein noch über den Flansch 5 nach außen vorstehender Teil des Klemmkeils 2 kann nach dem endgültigen Verspreizen vernietet werden, da der den Klemmkeil 2 bildende Stahl verhältnismäßig weich ist.

## Patentansprüche

1. Befestigungselement, bestehend aus einem Ankerbolzen (1) und einem Klemmkeil (2), wobei am hinteren Ende (4) des Ankerbolzens (1) ein Flansch (5) mit einer Durchgangs-Aussparung (19) für den Klemmkeil (2) vorgesehen ist, wobei der Ankerbolzen (1) in seinem vorderen Bereich (8) mit einer Keilfläche (9) versehen ist, die von seinem vorderen Ende (10) in Richtung zum hinteren Ende (4) zur Mittel-Längs-Achse (3) des Ankerbolzens (1) hin geneigt ist, wobei sich an diese Keilfläche (9) eine sich im wesentlichen parallel zur Mittel-Längs-Achse (3) erstreckende, bis zum hinteren Ende (4) verlaufende Fläche (6) anschließt, und wobei der Klemmkeil (2) in ungespreiztem Zustand den Ankerbolzen (1) zu einem etwa zylindrischen Profil ergänzt und hierzu mit einer Anlagefläche (12) an der achsparallelen Fläche (6) und mit einer Spreizfläche (15) an der Keilfläche (9) anliegt, wobei sich das vordere Ende (17) des Klemmkeils (2) nicht bis zum vorderen Ende (10) des Ankerbolzens (1) erstreckt und das hintere Ende (13) des Klemmkeils (2) über den Flansch (5) hinausragt und wobei der Klemmkeil (2) eine Soll-Bruch-Stelle (30) aufweist,
**dadurch gekennzeichnet,**
**dass** die Soll-Bruch-Stelle (30) durch einen parallel zur Mittel-Längs-Achse (3) verlaufenden Steg (29) gebildet ist, der beidseitig durch einander gegenüberliegende Einschnitte (23, 24) in den Klemmkeil (2) begrenzt ist, die geneigt zur Mittel-Längs-Achse (3) verlaufende, zueinander parallel und eben ausgebildete Schrägflächen (27, 28) aufweisen,
**dass** der Klemmkeil (2) im Bereich seines vorderen Endes (17) auf seiner Außenfläche (11) eine nach außen vorragende Bremsfläche (35) aufweist, und
**dass** der Klemmkeil (2) aus einem ungehärteten und unvergüteten Stahl besteht.

2. Befestigungselement nach Anspruch 1, **dadurch gekennzeichnet,**
**dass** der Ankerbolzen (1) in seinem vorderen Bereich (10) auf seiner der Keilfläche (2) abgewandten Rückseite (31) eine Riffelung (32) mit einer Tiefe d aufweist.

3. Befestigungselement nach Anspruch 2, **dadurch gekennzeichnet,**
**dass** die Riffelung (32) als Rechteck-Verzahnung (33) ausgebildet ist.

4. Befestigungselement nach Anspruch 2, **dadurch gekennzeichnet,**
**dass** die Riffelung (32) als Säge-Verzahnung (34) ausgebildet ist.

5. Befestigungselement nach einem der Ansprüche 2 bis 4,
**dadurch gekennzeichnet,**
**dass** für die Tiefe d der Riffelung (32) gilt: 0,2 mm ≤ d ≤ 0,4.

6. Befestigungselement nach Anspruch 1, **dadurch gekennzeichnet,**
**dass** die Bremsfläche (35) eine Oberflächen-Rauigkeit (37) von 30 µm bis 45 µm und bevorzugt von 36 µm aufweist.

7. Befestigungselement nach Anspruch 1 oder 6, **dadurch gekennzeichnet, dass** die Bremsfläche (35) mit einer Kante (36) in die Außenfläche (11) übergeht.

8. Befestigungselement nach einem der Ansprüche 1 oder 6 oder 7, **dadurch gekennzeichnet,**
**dass** die Bremsfläche (35) um ein Maß e über die Außenfläche (11) vorsteht, für das gilt: 0,1 mm ≤ e ≤ 0,3 mm.

9. Befestigungselement nach einem der Ansprüche 1 bis 8,
**dadurch gekennzeichnet,**
**dass** die Schrägflächen (27, 28) unter einem Winkel α zur Mittel-Längs-Achse (3) verlaufen, für den gilt: 25° ≤ α ≤ 35° und bevorzugt α = 30°.

10. Befestigungselement nach einem der Ansprüche 1 bis 9,
**dadurch gekennzeichnet,**
**dass** der Steg (29) in der Mittel-Längs-Achse (3) verläuft.

## Claims

1. Attachment element consisting of an anchor bolt (1) and a wedge (2), wherein at the rear end (4) of the anchor bolt (1) a flange (5) is provided with a through recess (19) for the wedge (2), wherein the anchor bolt (1) is provided in its front area (8) with a wedge surface (9) which is inclined from its front end (10) in the direction of the rear end (4) relative to the middle longitudinal axis (3) of the anchor bolt (1), wherein a surface (6) extending essentially parallel to the middle longitudinal axis (3) and running up to the rear end (4) adjoins said wedge surface (9), and wherein the wedge (2) in the unspread state supplements the anchor bolt (1) to form a roughly cylindrical profile and for this purpose bears with a bearing surface (12) on the axially parallel surface (6) and with a spreading surface (15) on the wedge surface (9), wherein the front end (17) of the wedge (2) does not extend up to the front end (10) of the anchor bolt (1) and the rear end (13) of the wedge (2) projects over the flange (5) and wherein the wedge (2) has a predetermined breaking point (30),
**characterised**
**in that** the predetermined breaking point (30) is formed by a web (29) running parallel to the middle longitudinal axis (3), which is delimited on both sides by opposite notches (23, 24) in the wedge (2), which comprise oblique surfaces (27, 28) inclined to the middle longitudinal axis (3) and configured to be parallel to one another and planar,
**in that** the wedge (2) in the region of its front end (17) on its outer surface (11) has an outwardly projecting braking surface (35), and
**in that** the wedge (2) is made from unhardened and untempered steel.

2. Attachment element according to claim 1, **characterised in that** the anchor bolt (1) in its front area (10) on its rear side (31) averted from the wedge surface (2) has a fluting (32) with a depth d.

3. Attachment element according to claim 2, **characterised in that** the fluting (32) is configured as a square toothing (33).

4. Attachment element according to claim 2, **characterised in that** the fluting (32) is configured as a saw-toothing (34).

5. Attachment element according to any one of claims 2 to 4, **characterised in that** for the depth d of the fluting (32) 0.2 mm ≤ d ≤ 0.4.

6. Attachment element according to claim 1, **characterised in that** the braking surface (35) has a surface roughness (37) of 30 µm to 45 µm and preferably of 36 µm.

7. Attachment element according to claim 1 or 6, **characterised in that** the braking surface (35) passes with one edge (36) into the outer surface (11).

8. Attachment element according to any one of claims 1 or 6 or 7, **characterised in that** the braking surface (35) projects by an amount e over the outer surface (11) for which 0.1 mm ≤ e ≤ 0.3 mm.

9. Attachment element according to any one of claims 1 to 8, **characterised in that** the oblique surfaces (27, 28) run at an angle α relative to the middle longitudinal axis (3) for which 25° ≤ α ≤ 35° and preferably α = 30°.

10. Attachment element according to any one of claims 1 to 9, **characterised in that** the web (29) runs in the middle longitudinal axis (3).

## Revendications

1. Elément de fixation constitué d'un boulon d'ancrage (1) et d'un élément de serrage (2), un collet (5) comprenant un évidement pour le passage (19) de l'élément de serrage (2) étant prévu à l'extrémité arrière (4) du boulon d'ancrage (1), le boulon d'ancrage (1) étant pourvu d'un surface inclinée (9) dans sa partie avant (8), qui est inclinée vers l'axe longitudinal central (3) du boulon d'ancrage (1) à partir de son extrémité avant (10) en direction de l'extrémité arrière (4), une surface (6), s'étendant dans l'ensemble parallèlement à l'axe longitudinal central (3) jusqu'à l'extrémité arrière (4), poursuivant cette surface inclinée (9), et l'élément de serrage (2), à l'état non écarté complétant le boulon d'ancrage (1) pour former un profil à peu près cylindrique, et s'appuyant dans ce but, grâce à une surface d'appui (12) contre la surface (6) parallèle à l'axe, et grâce à une surface d'écartement (15) contre la surface inclinée (9), l'extrémité avant (17) de l'élément de serrage (2) ne s'étendant pas jusqu'à l'extrémité avant (10) du boulon d'ancrage (1) et l'extrémité arrière (13) de l'élément de serrage (2) dépassant du collet (5) et l'élément de serrage (2) présentant un point de rupture (30),
**caractérisé en ce**
**que** le point de rupture (30) est formé par une entretoise (29) s'étendant parallèle à l'axe longitudinal central (3), entretoise qui est délimitée des deux côtés par des encoches (23, 24), l'une en face de l'autre, dans l'élément de serrage (2), qui présentent des surfaces inclinées (27, 28) formées planes et parallèles entre elles, s'étendant de manière inclinée par rapport à l'axe longitudinal central (3),
**que** l'élément de serrage (2) présente sur sa surface externe (11) une surface de freinage (35) dépassant vers l'extérieur dans la partie de son extrémité avant (17), et
**que** l'élément de serrage (2) est constitué d'un acier non durci et non traité.

2. Elément de fixation selon la revendication 1 **caractérisé en ce**
**que** le boulon d'ancrage (1) présente un crantage (32) d'une profondeur d sur sa partie avant (10) sur la face arrière (31) à l'opposé de sa surface inclinée (2).

3. Elément de fixation selon la revendication 2 **caractérisé en ce**
**que** le crantage (32) est conçu sous la forme d'une denture rectangulaire (33).

4. Elément de fixation selon la revendication 2 **caractérisé en ce**
**que** le crantage (32) est conçu sous la forme d'une denture en dents de scie (34).

5. Elément de fixation selon l'une des revendications de 2 à 4 **caractérisé en ce**
**que** l'on ait pour la profondeur d du crantage (32) : 0,2 mm ≤ d ≤ 0,4.

6. Elément de fixation selon la revendication 1 **caractérisé en ce**
**que** la surface de freinage (35) présente une rugosité de surface (37) entre 30 µm et 45 µm, et présente de préférence une rugosité de 36 µm.

7. Elément de fixation selon les revendications 1 ou 6 **caractérisé en ce que** la surface de freinage (35) dépasse au niveau de la surface externe par un rebord (36).

8. Elément de fixation selon l'une des revendications 1 ou 6 ou 7 **caractérisé en ce**
**que** la surface de freinage (35) dépasse au niveau de la surface externe (11) d'une dimension e pour laquelle on a : 0,1 mm ≤ e ≤ 0,3 mm.

9. Elément de fixation selon l'une des revendications de 1 à 8 **caractérisé en ce**
**que** les surfaces inclinées (27, 28) font un angle α par rapport à l'axe longitudinal central (3), pour lequel on a : 25° ≤ α ≤ 35° et de préférence α = 30°.

10. Elément de fixation selon l'une des revendications de 1 à 9 **caractérisé en ce**
**que** l'entretoise (29) s'étend dans l'axe longitudinal central (3).
